# EUROPEAN PATENT APPLICATION

(11) **EP 3 578 448 A1**
(43) Date of publication of application: **11.12.2019**
(21) Application number: 19179126.8
(22) Date of filing: 07.06.2019
(51) Int. Cl.: B62H 3/04, B62H 5/00, B62H 3/00

(54) **A CYCLE AND A DOCK**

(30) Priority: 07.06.2018 GB 201809399; 22.06.2018 GB 201810334
(71) Applicant: Pashley Holdings Limited, Stratford-upon-Avon CV37 9NL (GB)
(72) Inventor: Cumberpatch, Jon Lewis, Stratford-Upon-Avon, Warwickshire CV37 9NL (GB); Williams, Adrian Michael Alan, Stratford-Upon-Avon, Warwickshire CV37 9NL (GB)
(74) Representative: Dempster, Benjamin John Naftel

(57) **Abstract**

The invention relates to a cycle 10 and a dock. The cycle 10 includes a lock including a main body attached to the cycle 10 and a member which can be moved from an unlocked position to a locking position in which it extends through the spokes 42 of a wheel 14 of the cycle 10 to prevent the wheel 14 from turning. The dock includes one or two upright plates 74 defining an aperture 76 such that the cycle 10 can be secured to the dock by offering the cycle 10 to the dock and moving the lock member through the or each dock aperture 76 into the locking position.

## Description

The invention relates to a cycle and a dock.

In a known cycle and dock system, once the cycle has been released from the lock, there Is no way to lock the cycle without putting it back into another dock, unless the user has had the foresight to bring a separate lock with them.

According to one aspect of the invention there is provided the combination of a cycle and a dock, the cycle including a lock, the lock including a main body attached to or integral with the cycle and a member which can be moved along a path from an unlocked position to a locking position in which it extends through the spokes of a wheel of the cycle to prevent the wheel from turning, the dock including means defining at least one aperture in a predetermined position, and the combination being such that the cycle can be offered to the dock, so that the dock aperture or apertures lie on the lock member path, so that the lock member can be moved along the path, through the or each dock aperture into the locking position to secure the cycle to the dock.

In this way, not only is the user provided with a method of locking the cycle without having to find a dock to place it in, but the lock on the cycle also serves the purpose of locking the cycle into the dock.

The cycle can be any kind of wheeled vehicle, such as a bicycle, tricycle, scooter, electrically powered cycle or motorcycle, for example.

The lock member may be a bar. The lock member may be arranged to move along a curved path. The lock member may be arranged to move lengthways along the path.

The lock may be any suitable type of "bar through wheel spoke" lock, such as a horseshoe lock. Horseshoe locks are known and readily available.

The main body of the lock may be located on the cycle in any suitable position and in one embodiment the main body of the lock located on the front side of the fork of the cycle. Indeed, the main body of the lock may be integral with the front fork of the cycle. In this way, the cycle can be put into the dock forwards, in the usual way. In an alternative embodiment, however, the main body of the lock may be located on the rear side of the seat stay of the cycle. In that case the cycle would be placed in the dock backwards.

The main body of the lock may form part of a unit which also includes a light to enable the cyclist to see or be seen. Thus, a single unit can be attached to the cycle performing both the function of locking and lighting, thereby simplifying manufacture.

The or each aperture defined by the means preferably has an axis which is substantially horizontal. The means defining an aperture of the dock may take any suitable form, such as a ring, but in one embodiment the aperture means comprises at least one upright plate, the or each upright plate defining the or one said aperture. Being upright, and relatively slim, the plate can be moved alongside the wheel between the wheel and the lock so that the aperture can be located in the path of travel of the lock member.

Preferably, the dock includes a stop to engage the cycle, the combination being such that when the cycle engages the stop, the lock member and path are aligned with the or each said aperture so that the lock member can move through the or each aperture into the locking position.

The dock may include means defining a slot to receive a wheel of the cycle to support the cycle in the upright position.

In a preferred embodiment, the slot in the dock also comprises the said stop. The part of the dock defining the top edge of the slot may comprise the said stop.

The dock may take any suitable form, but in one embodiment the dock comprises two upright parts, the means defining a slot is situated between the two upright parts to receive a wheel of a cycle, and one or both upright parts carries an upright plate, the or each upright plate defining the said aperture. The or each upright plate may extend from an upright part in the direction of intended entry of the cycle wheel into the slot.

According to another aspect of the invention there is provided a cycle including a lock, the lock including a main body attached to or integral with the front side of the fork of the cycle, and a member which can be moved along a path from an unlocked position to a locked position in which it extends through the spokes of a wheel of a cycle to prevent the wheel from turning.

The lock member may be a bar. The lock member may be arranged to move lengthways along the path. The lock member may be arranged to move along a curved path.

The lock may be a horseshoe lock, and the main body of the lock may form part of the unit which also includes a light to enable a cyclist to see or be seen.

According to a further aspect of the invention there is provided a dock comprising means defining a slot arranged to receive a wheel of a cycle, the dock further comprising one or two means defining an aperture in a predetermined position to receive a locking member of a lock of a cycle, the axis of the or each aperture being substantially horizontal, the lock being of the type including a main body attached to the cycle, and a member which can be moved along a path from an unlocked position to a locking position in which it extends through the spokes of a wheel of the cycle to prevent the wheel from turning.

The aperture means may comprise a ring and in a preferred embodiment comprises at least one upright plate, and the or each upright plate may extend in the direction of intended entry of a cycle wheel into the slot. The dock may define the slot between two upright parts, and the or each means defining an aperture may be carried by one of the said upright parts.

An embodiment of the invention will now be described by way of example and with reference to the accompanying drawings, in which:

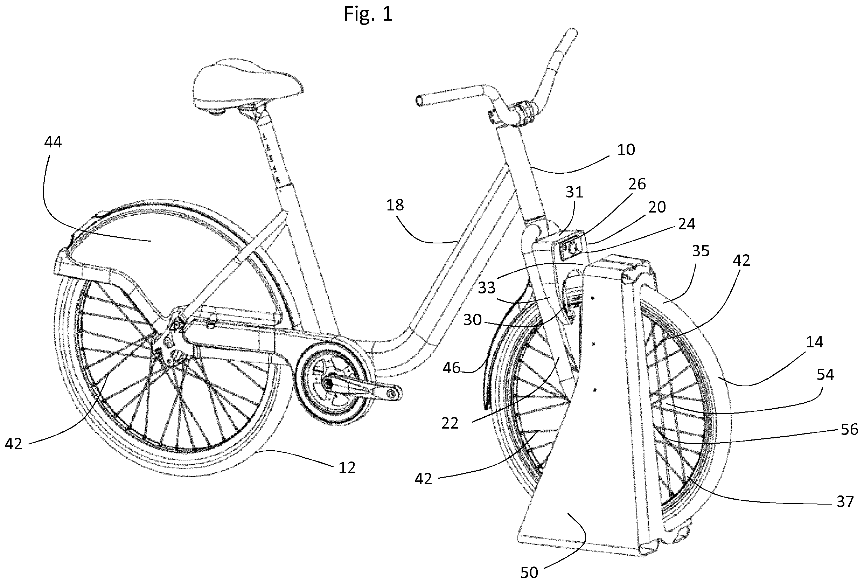

Fig. 1 is a perspective view from the front of a bicycle of the embodiment of the invention;
Fig. 2A is a fragmentary detail view of the front of the bicycle of Fig. 1 showing the lock in the unlocked position;
Fig. 2B is the view of Fig. 2A with the lock member shown part way between the unlocked and locked positions;
Fig. 2C is the view of Fig. 2A with the lock member in the locked position;
Fig. 3A shows the bicycle with the front wheel entering the dock of the embodiment of the invention;
Fig. 3B shows the bicycle fully inserted into the dock and locked on to the dock; and,

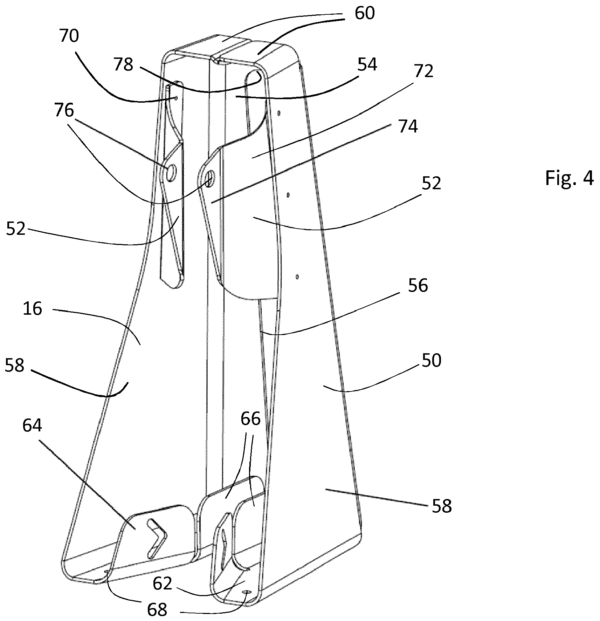

Fig. 4 shows the dock in a perspective view from the entrance to the dock.

The cycle and dock system of the embodiment of the invention comprises a bicycle 10 with spoked front and rear wheels 12, 14, and a dock 16.

The bicycle 10 has a step through frame 18 and includes a box 20 attached to the front side of the fork 22 of the bicycle 10. The box 20 contains a forward facing light 24 to cast light for the cyclist to see by and to increase their visibility. The box 20 also contains a laser 26 to project a pattern in visible light on the ground ahead of the bicycle 10 to help make drivers and pedestrians more aware of an approaching cyclist on the bicycle 10.

The box 20 also contains a horseshoe lock 30. The box 20 hence includes a main part 31 above the front wheel 14, and two rigid limbs 33 depending from the main part 31 on either side of the tyre 35 and rim 37 of the wheel 14 to the level of the spokes 42. The horseshoe lock 30 has a lock member in the form of a circular cross section steel bar 32 the length of which follows a part circular shape. A knob 34 is attached to the bar 32 via a shank 36 extending forwardly from the bar 32. The shank 36 travels through a curved slot 38 in the front face 40 of one limb 33 of the box 20.

The top section of the rear wheel 12 is covered by a mudguard cover 44. The front wheel 14 includes a mudguard 46, which extends rearwardly from the front fork 22 following the contour of the front wheel 14.

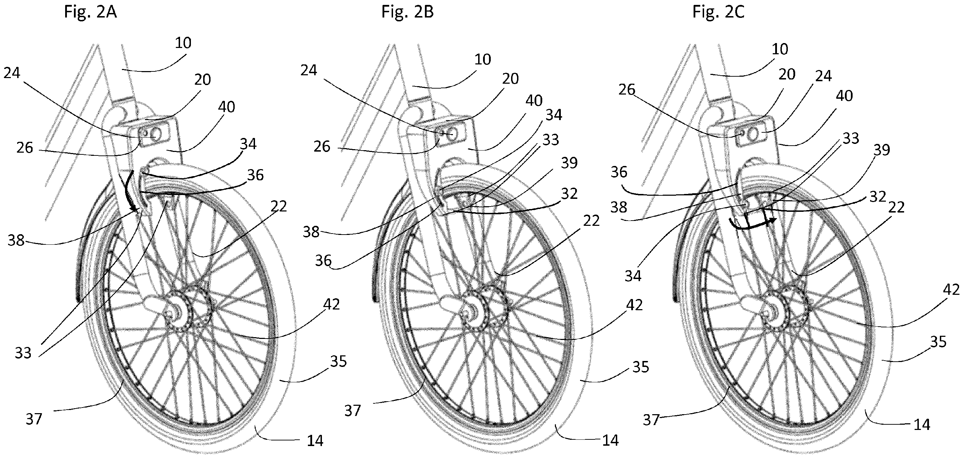

In use, when the user is riding the bicycle 10, and wishes to stop and leave the bicycle temporarily, for example to have a coffee or visit a shop, the bicycle 10 can be immobilised using the lock 30. From the position shown in Figure 2A, with the knob 34 at the top end of the track 38, the user grasps the knob 34 and pushes it downwards along the track in the direction shown by the arrow in Figure 2A. As shown in Figure 2B, as the knob 34 travels along the track 38, the lock bar 32 will start to protrude from the box 20 and between the spokes 42 of the front wheel 14 of the bicycle 10. As shown in Figure 2C, when the knob 34 has been pushed to the far end of the track 38, the bar 32 will have passed between the spokes 42 of the front wheel 14 and into an aperture 39 in the limb 33 on the other side of the box 20 where it is locked in position so that it cannot be released. The bicycle 10 can then be left safely, without the risk that someone will steal it by riding it away.

The lock 30 may be of a type which is unlocked using a signal from a mobile phone.

Looking now at the dock 16, the dock 16 comprises a main part 50 bent from a single sheet of steel and two wings 52 attached thereto.

The main part 50 includes a front face 54 defining an upright, round ended slot 56 to receive the front wheel 14 of the bicycle 10. The dock 16 is generally symmetrical about a vertical plane. On each side of the front part 54 a side part 58 is bent rearwardly. The top 60 of each side part 58 is bent over so that they overlap each other. At the bottom of each side part 58, a flap is bent through 90° to form a ground engaging panel 62, and the end of the panel 62 turned upwardly to form two guide flanges 64, 66.

The panel 62 defines a plurality of holes 68 by means of which the dock 16 can be bolted to the ground. The flaps 66 are parallel to one another while the flaps 64 are at a non-zero acute angle so as to guide the front wheel 14 of the bicycle 10 into the channel defined between the flaps 66 and thence into the slot 56 in the front plate 54.

Each wing 52 is riveted to the inner surface of the upper part of the side panel 58. Each wing 52 includes a flat flange 70, which is the part which is riveted to the side panel 58, and a curved part 72 which extends from the flat flange 70 inwards towards the other wing 52 and terminates in a locking flange 74 which is an upright plate extending rearwardly in the direction of intended entry of the bicycle wheel 14 into the dock 16 and defines an aperture 76. The upright plates 74 are parallel to one another and the apertures 76 are aligned with one another, being at the same height and the same distance from the slot 56.

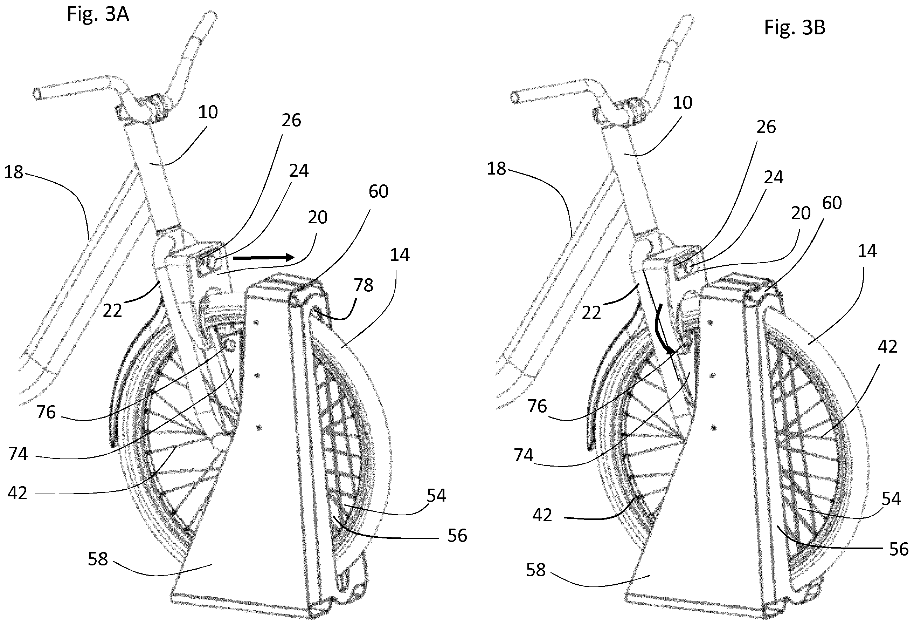

In use, as shown in Figs. 3A and 3B, the bicycle 10 is pushed towards the dock 16. The front wheel 14 of the bicycle 10 will be guided into the dock 16 by the guide flaps 64. The rearmost edge of the locking plate 74 is at a similar distance in a rearward direction to the rearmost edge of the parallel flaps 66. The bicycle wheel 14 will thus be received between the parallel flaps 66 and between the locking plates 74 and travel forwards to enter the slot 56 in the front face 54. Once the front wheel 14 of the bicycle 10 has gone far enough into the dock 16, the front wheel 14 will engage the rounded top edge 78 of the slot 56. In this position, the lock 30 will be aligned with the apertures 76 in the locking plates 74. In that position, the user can push the knob 34 to drive the locking bar 32 so that it passes first through the aperture 76 in one locking plate 74, then through the wheel 14 of the bicycle 10, between the spokes 42, then through the other aperture 76 in the other locking plate 74 and finally into the other side of the box 20 to be locked. In this way, the bicycle 10 is locked to the dock 16. This design of dock 16 allows for sufficient access to the lock 30 for the user to physically operate the lock 30.

It is thus seen that by means of the bicycle 10 and dock 16 of the embodiment of the invention, the user is provided with a means of locking the bicycle 10 without having to find a dock to place it in, as the horseshoe lock 30 can be used to lock the bicycle 10. As the lock 30 also locks the bicycle 10 to the dock 16, there is dual functionality and no need for a second lock on the bicycle 10 or the dock 16 in order to lock the bicycle 10 to the dock 16. The lock 30 performs both functions.

The box 20 does not have to be on the front fork 22 of the bicycle 10. Instead, in another embodiment, it is attached to the rear side of the seat stay of the bicycle 10, in which case the bicycle 10 would be put into the dock backwards.

In a variant on the embodiment, the laser 26 may be omitted, and the front light 24 may also be omitted.

In another variant, there may be only a single wing 52, on the dock 16. Thus, the lock 30 of the bicycle 10 would only be attached to one upright plate 74 of the dock 16.

The lock 30 does not have to be a horseshoe lock, but could be any other kind of "bar through wheel spoke" lock.

The main body of the lock could be integrated into the front fork in another variant.

The dock 16 does not have to be as shown, and could be any bicycle rack, pole or stand including a member, which could be a plate, ring or loop, for example, defining an appropriate aperture or apertures 76.

## Claims

1. The combination of a cycle and a dock, the cycle including a lock, the lock including a main body attached to or integral with the cycle, and a lock member which can be moved along a path from an unlocked position to a locking position in which it extends through the spokes of a wheel of the cycle to prevent the wheel from turning, the dock including means defining at least one aperture in a predetermined position, and the combination being such that the cycle can be is offered to the dock, so that the dock aperture or apertures lie on the lock member path, so that the lock member can be moved along the path through the or each dock aperture into the locking position to secure the cycle to the dock.

2. The combination as claimed in claim 1, wherein the lock member is a bar.

3. The combination as claimed in claim 1 or claim 2, wherein the lock member is arranged to move along a curved path.

4. The combination as claimed in claim 1, 2 or 3, wherein the lock member is arranged to move lengthways along the path.

5. The combination as claimed in any preceding claim, wherein the lock is a horseshoe lock.

6. The combination as claimed in any preceding claim, wherein the main body of the lock is located on the front side of the fork of the cycle, or wherein the main body of the lock is located on the rear side of a seat stay of the cycle.

7. The combination as claimed in any preceding claim, wherein the or each aperture defined by the means has an axis which is substantially horizontal.

8. The combination as claimed in any preceding claim, wherein the aperture means comprises at least one upright plate, the or each upright plate defining the or one said aperture.

9. The combination as claimed in any preceding claim, wherein the dock includes a stop to engage the cycle, the combination being such that when the cycle engages the stop, the lock member and path are aligned with the or each said aperture so that the lock member can move along the path through the or each aperture into the locking position.

10. The combination as claimed in claim 9, wherein the dock includes means defining a slot to receive a wheel of the cycle to support the cycle in the upright position, and preferably wherein the slot in the dock also comprises the said stop, and preferably wherein the part of the dock defining the top edge of the slot comprises the said stop.

11. A cycle including a lock, the lock including a main body attached to or integral with the front side of the fork of the cycle, and a member which can be moved along a path from an unlocked position to a locked position in which it extends through the spokes of a wheel of the cycle to prevent the wheel from turning.

12. A cycle as claimed in claim 11, wherein the lock member is a bar, and/or wherein the lock member is arranged to move along a curved path, and/or wherein the lock member is arranged to move lengthways along the path.

13. A cycle as claimed in claim 11 or claim 12, wherein the lock is a horseshoe lock.

14. A dock comprising means defining a slot to receive a wheel of a cycle, the dock further comprising one or two means defining an aperture in a predetermined position to receive a locking member of a lock of a cycle, the axis of the or each aperture being substantially horizontal, the lock being of the type including a main body attached to the cycle, and a member which can be moved along a path from an unlocked position to a locking position in which it extends through the spokes of a wheel of the cycle to prevent the wheel from turning.

15. A dock as claimed in claim 14, wherein the or each means defining an aperture is an upright plate, and preferably wherein the or each upright plate extends in the direction of intended entry of a cycle wheel into the slot.
